Europäisches Patentamt

European Patent Office

Office européen des brevets

(19)

(11) Veröffentlichungsnummer: 0 222 985
A2

## (12) EUROPÄISCHE PATENTANMELDUNG

(21) Anmeldenummer: 86111533.5

(22) Anmeldetag: 20.08.86

(51) Int. Cl.4: G11B 5/187 , G11B 5/193

(30) Priorität: 18.10.85 DE 3537110

(43) Veröffentlichungstag der Anmeldung:
27.05.87 Patentblatt 87/22

(84) Benannte Vertragsstaaten:
CH DE FR GB IT LI

(71) Anmelder: GRUNDIG E.M.V.
Elektro-Mechanische Versuchsanstalt Max
Grundig holländ. Stiftung & Co. KG.
Kurgartenstrasse 37
D-8510 Fürth(DE)

(72) Erfinder: Gukkenberger, Horst
Weiherhofer Hauptstrasse 81
D-8502 Zirndorf-Weiherhof(DE)
Erfinder: Eberle, Karl
Blütenstrasse 15
D-8501 Cadolzburg(DE)

(54) Mig-Magnetkopf.

(57) Bei einem sogenannten MIG-Magnetkopf mit einem Kern aus Ferrit, mit auf das Ferrit aufgesputterter oder aufgedampfter Sendustlegierung und mit einem Nutzspalt, wird vorgeschlagen, beim Aufstäuben ( = Sputtern) bzw. Aufdampfen der Sendustlegierung auf das Ferrit die Zusammensetzung der einzelnen Komponenten der Sendustlegierung derart aufeinander abzustimmen, daß sich die Permeabilität bzw. die Sättigungsinduktion innerhalb des Bereichs der Sendustlegierung zumindest annähernd kontinuierlich ändert. Bei einem derartigen Magnetkopf treten keine Nebenspalteffekte auf.

Spalt

Ferrit      Sendust   Sendust   Ferrit

FIG.1

EP 0 222 985 A2

## MIG-MAGNETKOPF

Die vorliegende Erfindung betrifft einen MIG-Magnetkopf mit den im Oberbegriff des Anspruchs 1 angegebenen Merkmalen.

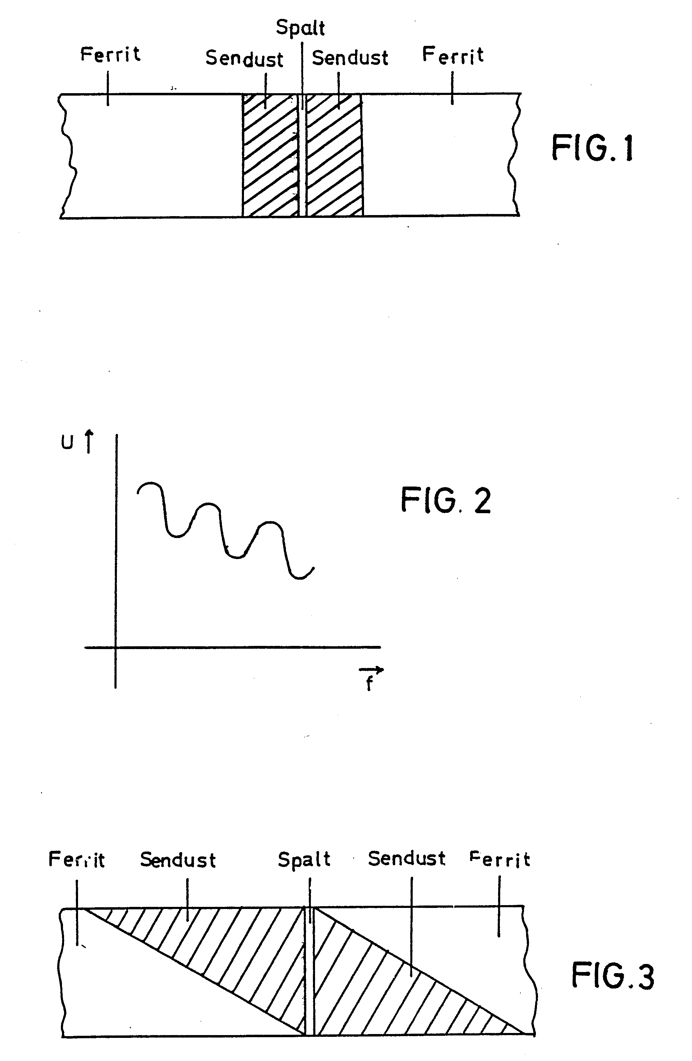

In den letzten Jahren wurden in der magnetischen Videotechnik sogenannte MIG-bzw. "metal-in-gap"-Magnetköpfe entwickelt, welche aufgrund ihrer magnetischen Eigenschaften zur Aufzeichnung von Videosignalen auf hochkoerzitive Bänder, insbesondere Metallpartikel-Bänder (MP Bänder) oder bedampfte Metallbänder (ME-Bänder), geeignet sind. Den Aufbau eines derartigen MIG-Magnetkopfes zeigt die Figur 1. Der Spalt des Kopfes ist beidseitig von einer weichmagnetischen Schicht hoher Permeabilität bzw. Sättigungsinduktion umgeben, welche vorzugsweise aus einer Sendustlegierung besteht, die den aus weichmagnetischem Material niedriger Permeabilität und Sättigungsinduktion, vorzugsweise aus weichmagnetischem Ferrit, bestehenden Kopfkern vom Spalt trennt.

Aus der Zeitschrift "IEEE Transactions on Magnetics", Sept. 1984, S. 872-874, ist es bekannt, daß bei MIG-Magnetköpfen an den Grenzflächen zwischen dem Ferrit und der Sendustlegierung unerwünschte Nebenspalteffekte auftreten, welche auf die unterschiedlichen magnetischen Eigenschaften von Ferrit und Sendustlegierung, insbesondere die unterschiedliche Permeabilität und die unterschiedliche Sättigungsinduktion, zurückzuführen sind. Den grundsätzlichen Verlauf der Wiedergabespannung in Abhängigkeit von der Frequenz, wie er mit einem solchen Kopf erhalten wird, zeigt die Figur 2. Die aus dieser Figur ersichtlichen unerwünschten Maxima und Minima der Wiedergabespannung sind Folgen des Nebenspalteffektes. Zur Verringerung dieser Nebenspalteffekt werden in dem genannten Artikel die folgenden theoretischen Möglichkeiten vorgeschlagen:

a) nur auf einer Seite des Spaltes wird eine Sendustlegierung vorgesehen, was theoretisch eine Verringerung der durch den Nebenspalteffekt hervorgerufenen Schwingungen der Wiedergabespannung um 50 % bewirkt;

b) die Breite der Sendustschicht auf beiden Seiten des Spaltes wird unterschiedlich gewählt; damit können jedoch nur Teile der durch den Nebenspalteffekt hervorgerufenen Schwingungen der Wiedergabespannung verringert werden.

c) Ganz allgemein wird in dem genannten Artikel noch in Betracht gezogen, daß durch technologische Fortschritte eine Reduzierung der durch die Nebenspalteffekt hervorgerufenen Störungen möglich sein könnte. Konkrete Vorschläge werden jedoch nicht angegeben.

Ferner wurde bereits vorgeschlagen, die genannten Nebenspalteffekte durch eine geeignete Winkelentkopplung der Nebenspalte gegenüber dem Nutzspalt so zu unterdrücken, daß das Nutzsignale keine sichtbaren Störungen mehr aufweist. Hierzu werden die Sendustschichten schräg zur Spaltebene unter Verwendung der bekannten Sputtertechnik auf das Ferrit aufgebracht. Einen nach dieser Technik aufgebauten Kopf,der auch als TSS-Kopf bezeichnet wird (tilted sendust sputtered ferrite head), zeigt die Figur 3. Die Fertigung derartiger Köpfe, bei denen die Ursachen der Nebenspalteffekte, d. h. die unterschiedlichen magnetischen Eigenschaften von Ferrit und Sendustlegierung, nach wie vor bestehen, ist jedoch wegen der Winkelentkopplung vergleichsweise aufwendig.

Gegenüber diesem Stand der Technik liegt der vorliegenden Erfindung die Aufgabe zugrunde, einen MIG-Magnetkopf zu schaffen, der einfach zu fertigen ist und bei dem die Nebenspalteffekte grundsätzlich nicht auftreten.

Diese Aufgabe wird bei einem MIG-Magnetkopf, der im Oberbegriff des Anspruchs 1 angegebenen Art durch die kennzeichnenden Merkmale des Anspruchs 1 gelöst. Vorteilhafte Weiterbildungen ergeben sich aus den Ansprüchen 2 und 3.

Die Vorteile der Erfindung liegen insbesondere darin, daß bei der Fertigung die Eigenschaften der bekannten Sputter-oder der Aufdampftechnik, d. h. das Aufstäuben oder Aufdampfen der Sendustlegierung auf das Ferrit, auch ausgezeichnet für die Herstellung eines MIG-Magnetkopfes verwendet werden kann, bei dem die Nebenspalteffekte von ihrer Ursache her beseitigt sind.

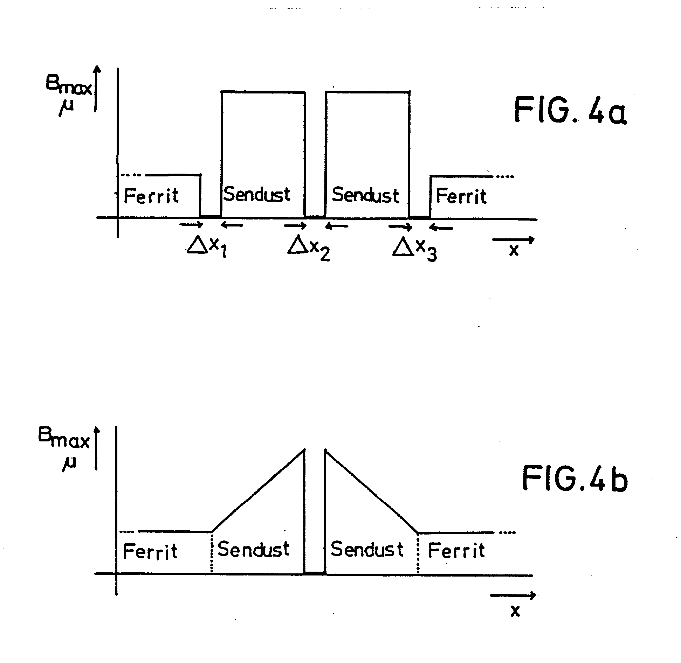

In folgenden wird die vorliegende Erfindung anhand der Figuren 4a bis 4d näher erläutert.

Die Figur 4a zeigt den Verlauf von Permeabilität $\mu$ bzw. Sättigungsinduktion $B_{max}$ in Abhängigkeit von der Ortskoordinate x bei einem herkömmlichen MIG-Magnetkopf. Die unerwünschten Nebenspalteffekte treten an den Grenzflächen $\Delta x_1$ und $\Delta x_3$ zwischen dem Ferrit und der Sendustlegierung auf. Der Nutzspalt befindet sich im Intervall $\Delta x_2$ zwischen den beiden Sendustschichten, die bei der Fertigung des Magnetkopfes durch Sputtern (bzw. Aufstäuben) oder durch Aufdampfen auf das Ferrit erzeugt werden. Die in Figur 2 gezeigten unerwünschten Maxima und Minima der Wiedergabespannung werden durch die sich an den Grenzflächen zwischen dem Ferrit und der Sendustlegierung sprunghaft ändernde Permeabilität $\mu$ bzw. Sättigungsinduktion $B_{max}$ hervorgerufen.

Gemäß der vorliegenden Erfindung wird deshalb vorgeschlagen, die magnetischen Eigenschaften der Sendustlegierung in Abhängigkeit von der Ortskoordinate x kontinuierlich bzw. in sehr kleinen Schritten so zu ändern, daß (zumindest annähernd) ein kontinuierlicher Übergang erreicht wird, wie es in den Figuren 4b bis 4d gezeigt ist.

Gemäß Figur 4b steigt die Permeabilität bzw. die Sättigungsinduktion der Sendustlegierung zwischen dem Ferrit und dem Spalt in Richtung zum Spalt linear an. Bei einem derartigen Magnetkopf tritt lediglich noch an den Grenzen zwischen Sendustlegierung und Spalt eine sprunghafte Veränderung von Permeabilität bzw. Sättigungsinduktion auf, die allerdings in diesem Bereich erwünscht ist.

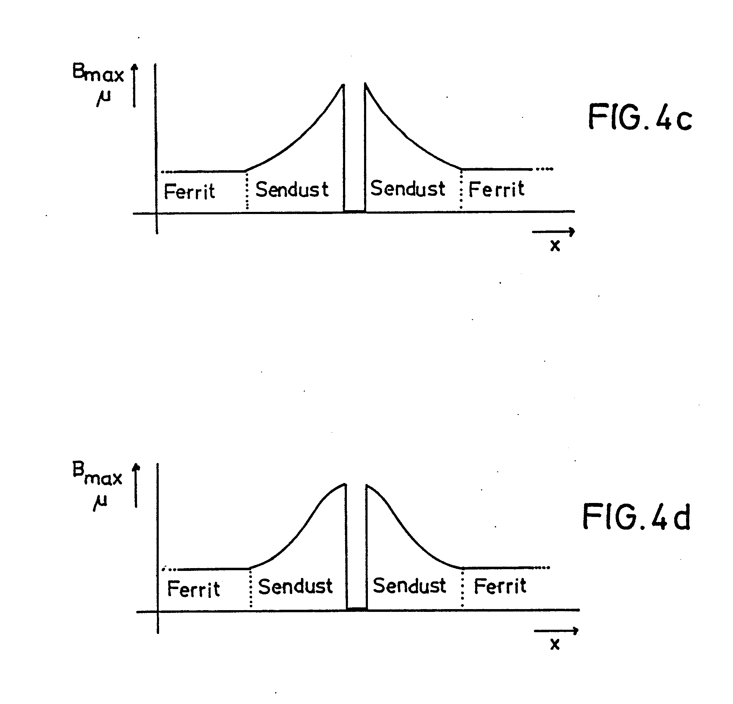

Der Verlauf von Permeabilität und Sättigungsinduktion im Bereich der Sendustlegierung kann aber auch so gewählt werden, wie es beispielsweise in den Figuren 4 c und 4 d gezeigt ist.

Bei sämtlichen, in den Figuren 4 b bis 4 d gezeigten Magnetköpfen treten die Nebenspalteffekte nicht mehr auf, da an den Grenzflächen zwischen Ferrit und Sendustlegierung kein Sprung in der Permeabilität bzw. der Sättigungsinduktion auftritt.

Die Fertigung derartiger Köpfe ist in einfacher Weise mittels der bekannten Sputter-oder mittels der Aufdampftechnik möglich. Es brauchen lediglich die einzelnen Komponenten bzw. Schichten so aufeinander abgestimmt zu werden, daß einer der in den Figuren 4b bis 4d gezeigten Verläufe von Permeabilität bzw. Sättigungsinduktion erhalten wird. Dies bereitet im Vergleich zur Fertigung herkömmlicher MIG-Köpfe nahezu keinerlei Zusatzaufwand.

Eine vorteilhafte Weiterbildung der Erfindung besteht darin, zwischen die einzelnen Schichten der Sendustlegierung dünne Trennschichten parallel zum Spalt einzufügen. Damit wird erreicht, daß die während des Sputtervorgangs auftretenden mechanischen Spannungen, die insbesondere dann, wenn dicke Sendustschichten aufgesputtert werden müssen, zu einer Ablösung des aufgesputterten Materials von der Ferritschicht und zu einer Verschlechterung der magnetischen Eigenschaften des aufgesputterten Materials führen könnten, verhindert werden. Die trennenden Schichten müssen in der Praxis so dünn bemessen sein, daß keine Nebenspalteffekte auftreten. Dies ist ohne weiteres möglich.

Eine zweite vorteilhafte Weiterbildung der Erfindung kann darin bestehen, daß innerhalb der Sendustschicht senkrecht zum Spalt angeordnete dünne Isolierschichten eingefügt werden. Damit wird zusätzlich eine Verbesserung des Aufzeichnungs-und Wiedergabeverhaltens bei hohen Frequenzen erzielt. Die Anzahl der einzelnen isolierenden Schichten bzw. die Dicke der einzelnen Sendustschichten kann dabei so variiert werden, daß ein gewünschter Frequenzgang erzielt wird.

Es liegt selbstverständlich auch im Rahmen der Erfindung, anstelle des Ferrits ein anderes weichmagnetisches Material mit niedriger Permeabilität und Sättigungsinduktion oder anstelle der Sendustlegierung ein anderes Material mit hoher Permeabilität bzw. hoher Sättigungsinduktion zu verwenden.

Auch kann der Verlauf von Permeabilität bzw. Sättigungsinduktion innerhalb der Sendustschicht geringfügig von dem in den Figuren 4b bis 4d gezeigten abweichen. Es ist lediglich darauf zu achten, daß -insbesondere an den Grenzflächen zwischen dem Ferrit und der Sendustlegierung - keine Sprünge der Permeabilität bzw. der Sättigungsinduktion auftreten.

## Ansprüche

1. Magnetkopf mit einem Kern aus Ferrit, mit auf das Ferrit aufgesputterter oder aufgedampfter Sendustlegierung und mit einem Nutzspalt, wobei an den Grenzflächen zwischen der Sendustlegierung und dem Nutzspalt sprunghafte Veränderungen der Permeabilität bzw. der Sättigungsinduktion auftreten, dadurch gekennzeichnet, daß beim Aufstäuben (= Sputtern) bzw. Aufdampfen der Sendustlegierung auf das Ferrit die Zusammensetzung der einzelnen Komponenten der Sendustlegierung derart aufeinander abgestimmt wird, daß sich die Permeabilität bzw. die Sättigungsinduktion innerhalb des Bereiches der Sendustlegierung zumindest annähernd kontinuierlich ändert.

2. Magnetkopf nach Anspruch 1, dadurch gekennzeichnet, daß zwischen die einzelnen Komponenten der Sendustlegierung dünne Trennschichten eingefügt werden.

3. Magnetkopf nach Anspruch 1 oder 2, dadurch gekennzeichnet, daß innerhalb der Sendustschicht senkrecht zum Spalt angeordnete dünne Isolierschichten eingefügt werden.

Ferrit    Sendust    Spalt    Sendust    Ferrit

FIG.1

$U \uparrow$

$\vec{f}$

FIG. 2

Ferrit    Sendust    Spalt    Sendust    Ferrit

FIG.3

FIG. 4a

FIG.4b

FIG. 4c

FIG. 4d